# EUROPÄISCHE PATENTANMELDUNG

(11) **EP 1 806 637 A1**
(43) Veröffentlichungstag der Anmeldung: **11.07.2007**
(21) Anmeldenummer: 06125782.0
(22) Anmeldetag: 11.12.2006
(51) Int. Cl.: G05B 19/042, G05B 19/418

(54) **Verfahren zum Betrieb eines Automatisierungsgerätes und Automatisierungsgerät**

(30) Priorität: 20.04.2006 DE 102006018414; 12.12.2005 EP 05027130
(71) Anmelder: SIEMENS AKTIENGESELLSCHAFT, 80333 München (DE)
(72) Erfinder: Bitzer, Rainer, 67480, Roeschwoog (FR); Pohlan, Rudolf, 76337, Waldbronn (DE)

(57) **Zusammenfassung**

Die Erfindung betrifft ein Verfahren zum Betrieb eines Automatisierungsgerätes (16) sowie ein korrespondierendes Automatisierungsgerät (16), auf dem zumindest eine erste Softwareapplikation (12) implementiert ist und wobei ein Datenaustausch zwischen der ersten Softwareapplikation (12) und einer zweiten Softwareapplikation (14) in einem Metaformat erfolgt, wobei vor einer Übernahme der übermittelten Daten (10) durch jeweils entweder die erste oder zweite Softwareapplikation (12, 14) eine Umsetzung des Metaformats in ein auf Seiten der jeweiligen Softwareapplikation (12, 14) unterstütztes Datenformat durch einen Metaformatinterpreter (28) erfolgt, bei dem bei oder vor einem Zugriff auf die Daten (10) im Metaformat durch ein erstes Zugriffsmittel (26) eine Analyse der Daten (10) im Metaformat erfolgt und abhängig vom Ergebnis der Analyse ein Zugriff auf die Daten (10) entweder mittels des Metaformatinterpreters (28) oder durch zweite Zugriffsmittel erfolgt.

## Beschreibung

Die Erfindung betrifft ein Verfahren zum Betrieb eines Automatisierungsgerätes gemäß dem Oberbegriff des Anspruchs 1 sowie ein nach dem Verfahren arbeitendes Automatisierungsgerät oder ein Automatisierungsgerät, das zur Ausführung des Verfahrens vorbereitet und/oder vorgesehen ist. Automatisierungsgeräte sind allgemein bekannt. Zum Beispiel bietet die Anmelderin unter der Marke SIMATIC eine komplette Produktfamilie von Automatisierungsgeräten für unterschiedlichste Anwendungsfälle an.

Speziell betrifft die Erfindung ein Verfahren zum Betrieb eines Automatisierungsgerätes (oder eines Automatisierungssystems mit mindestens einem Automatisierungsgerät) - wobei der Begriff Automatisierungsgerät als Synonym für Datenverarbeitungsgeräte allgemeiner Art, z. B. so genannte Engineeringstationen, verwendet wird -, auf dem zumindest eine erste implementiert ist und wobei ein Datenaustausch zwischen der ersten Softwareapplikation und einer zweiten Softwareapplikation (Ursprungsapplikation bzw. Zielapplikation) in einem Metaformat erfolgt, wobei vor einer Übernahme der übermittelten Daten durch die Zielapplikation, also jeweils entweder die erste oder zweite Softwareapplikation, eine Umsetzung des Metaformats in ein auf Seiten der jeweiligen Zielapplikation unterstütztes Datenformat durch einen Metaformatinterpreter erfolgt.

Ein solcher Datenaustausch zwischen Softwaresystemen oder Softwareapplikationen gewinnt immer größere Bedeutung. Für den strukturierten Datenaustausch hat sich z. B. XML ("Extensible Markup Language") als Meta-Beschreibungssprache - im Folgenden kurz als Meta- oder Zwischensprache oder Metaformat bezeichnet - durchgesetzt. Der Weg des Datenaustausches mittels Metasprache (häufig basierend auf XML) mit einem externen vereinheitlichten Datenschema wird deshalb beschritten, weil proprietäre Programmierschnittstellen in heterogenen Systemen hinsichtlich des damit verbundenen Aufwands unattraktiv geworden sind.

Das von den Erfindern erkannte Problem besteht nun vornehmlich darin, die mittels Metaformat ausgetauschten Daten effizient zu interpretieren. Ein unmittelbarer Wunsch, die übergebenen Austauschdaten zu interpretieren, besteht in der Regel zunächst darin, die Daten vor einer Übernahme in die Zielapplikation zunächst einmal anschauen zu können. Dies sollte aus Anwendersicht möglichst in gewohnter Art und Weise unter Verwendung der jeweils üblichen Systemdarstellung geschehen können.

Bisher müssen die Daten im jeweiligen Metaformat in das von der Zielapplikation verwendete Format (z. B. ein Datenbankformat) überführt werden, bevor sie für die Darstellung und Weiterverarbeitung interpretiert werden können. Dieser Vorgang des Konvertierens ist deshalb notwendig, weil die eingesetzten Softwaresysteme nicht gleichzeitig mit dem eigentlichen eigenen Datenformat, also z. B. dem Datenbankformat, und dem Metaformat arbeiten können oder ein solches Metaformat überhaupt nicht direkt bearbeiten können. Ein weiteres Problem resultiert daraus, dass eine Umsetzung des Metaformats in ein Zielformat bei großen Datenmengen sehr zeitintensiv ist. Außerdem müssen die generierten Daten im Zielformat wieder künstlich vom Rechner, also z. B. dem jeweiligen Automatisierungsgerät, entfernt werden, unabhängig davon, ob sie vom Anwender als übernehmenswert erachtet werden oder nicht.

Eine direkte Darstellung der Daten im Metaformat wird zwar von speziellen Softwarewerkzeugen geleistet, allerdings mit dem Nachteil der eingeschränkten Lesbarkeit für den jeweiligen Anwender der Zielapplikation. Ein dem Metaformat zugrunde liegendes Schema ist dem Anwender der Zielapplikation in der Regel nicht bekannt. Allgemein können solche Detailkenntnisse nicht vorausgesetzt werden. Zudem möchte der Anwender üblicherweise in gewohnter Systemumgebung auf einer abstrakten Ebene arbeiten. Der Anwender erwartet also eine ihm vertraute Systemdarstellung. Dies ist mit den bisher im Stand der Technik verfolgten Ansätzen nicht möglich.

Der Erfindung liegt daher die Aufgabe zugrunde, ein Verfahren zum Betrieb eines Automatisierungsgerätes sowie ein korrespondierendes Automatisierungsgerät anzugeben, bei dem die oben genannten Nachteile vermieden oder zumindest in ihren Auswirkungen reduziert werden.

Die oben genannte Aufgabe wird mit dem oben genannten Verfahren dadurch gelöst, dass bei oder vor einem Zugriff auf die Daten im Metaformat durch ein erstes Zugriffsmittel, insbesondere einen so genannten "Broker", eine Analyse der Daten im Metaformat erfolgt und dass abhängig vom Ergebnis der Analyse ein Zugriff auf die Daten entweder mittels des Metaformatinterpreters oder durch zweite oder ggf. weitere Zugriffsmittel erfolgt.

Der Vorteil der Erfindung besteht darin, dass mittels des oder der ersten Zugriffsmittel eine Analyse der Daten im Metaformat erfolgen kann. Damit ist anhand des Ergebnisses dieser Analyse entscheidbar, ob ein Zugriff auf die Daten im Metaformat, also z. B. ein Zugriff wegen einer zu Überprüfungszwecken vorgesehenen Darstellung der Daten, mittels des Metaformatinterpreters, der das Metaformat direkt interpretieren und/oder verarbeiten kann, oder mittels zweiter oder ggf. weiterer Zugriffsmittel erfolgt. Dabei erlaubt das oder jedes zweite Zugriffsmittel eine Interpretation von Daten, die zwar in den im Metaformat übermittelten Daten enthalten sind, aber nach einem vom Metaformat abweichenden Format kodiert sind. Damit ist z. B. für die Darstellung zu Überprüfungszwecken gewährleistet, dass sowohl die im Metaformat als auch die in einem vom Metaformat abweichenden Format kodierten Daten in einer für den Benutzer erfassbaren Form dargestellt werden können.

Zweckmäßige Weiterbildungen dieses Verfahrens sind Gegenstand der nachgeordneten Ansprüche.

Wenn die im Metaformat übermittelten Daten strukturiert sind und jede Struktur ein Datenobjekt definiert, ist bevorzugt vorgesehen, dass das erste Zugriffsmittel bei der Analyse der Daten im Metaformat einen Objekttyp des jeweiligen Datenobjektes identifiziert und der Zugriff und/oder die Verarbeitung der Daten des Datenobjektes durch entweder den Metaformatinterpreter oder durch das zweite Zugriffsmittel in Ansehung des jeweiligen Objekttyps erfolgt.

Bevorzugt ist der Metaformatinterpreter als XML-Server oder SGML-Server und/oder das zweite Zugriffsmittel als Datenbankverwaltungssystem (DBMS) implementiert.

Bezüglich der Vorrichtung wird die genannte Aufgabe erfindungsgemäß gelöst durch ein Automatisierungsgerät mit den Merkmalen des Anspruchs 9. Hinsichtlich vorteilhafter Ausgestaltungen eines solchen Automatisierungsgerätes wird auf die vorangehend erläuterten Verfahrensschritte verwiesen, wobei das Automatisierungsgerät zu deren Ausführung jeweils entsprechende Mittel, insbesondere Verarbeitungsmittel, also z. B. eine softwaremäßige Implementation der mit den jeweiligen Verfahrensschritten erfassten Funktionalität, umfasst.

Wesentlicher Vorteil der vorgestellten Lösungsidee ist der integrative Ansatz, ohne Auswirkungen auf die Applikationen des Softwaresystems zu haben. Die Applikationen des Softwaresystems bleiben gänzlich frei von Abhängigkeiten zum Datenformat.

Darüber hinaus bestehen weitere Vorteile darin, dass kein zeitintensives Konvertieren des Metaformats, also insbesondere der XML-Daten, in das Zielformat des jeweiligen Softwaresystems oder der jeweiligen Softwareapplikation mehr notwendig ist, dass damit auch kein künstliches Entfernen der bisher zumindest temporär erforderlichen Daten im Zielformat mehr notwendig ist, dass sich eine Lesbarkeit der Daten im Metaformat, insbesondere der XML-Daten, in gewohnter Systemumgebung und in gewohnter Darstellung ergibt und dass keine zusätzlichen Detailkenntnisse bei der Hantierung der Daten im Metaformat, insbesondere der XML-Daten, für den Anwender notwendig sind.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder den Zeichnungen offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die, z. B. durch Kombination oder Abwandlung von einzelnen in Verbindung mit den im allgemeinen oder speziellen Beschreibungsteil beschriebenen sowie in den Ansprüchen und/oder den Zeichnungen enthaltenen Merkmalen bzw. Elementen oder Verfahrensschritten, für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: eine schematisch vereinfachte Darstellung eines Datenaustausches zwischen einem eine erste und eine zweite Softwareapplikation umfassenden Softwaresystem,
- FIG 2: ein Softwaresystem in schematisch vereinfachter Darstellung mit einem Zugriff auf eine erste und eine zweite Datenbank, wobei die zweite Datenbank eine temporär erzeugte Datenbank ist,
- FIG 3: in schematisch vereinfachter Form einen Zugriff auf Daten, die in einem Metaformat vorliegen,
- FIG 4: eine schematisch vereinfachte Darstellung des der Erfindung zugrunde liegenden Prinzips,
- FIG 5 und FIG 6: eine schematisch vereinfachte Darstellung einer Ablaufmöglichkeit des erfindungsgemäßen Verfahrens und
- FIG 7: eine schematisch vereinfachte Darstellung einer Anwendungsmöglichkeit der Erfindung im Zusammenhang mit einem Zugriff auf Engineeringdaten durch Planungstools (als Beispiel für eine am Datenaustausch beteiligte Softwareapplikation) und/oder einem Zugriff auf Planungsdaten durch Engineeringtools (als weiteres Beispiel für eine Softwareapplikation).

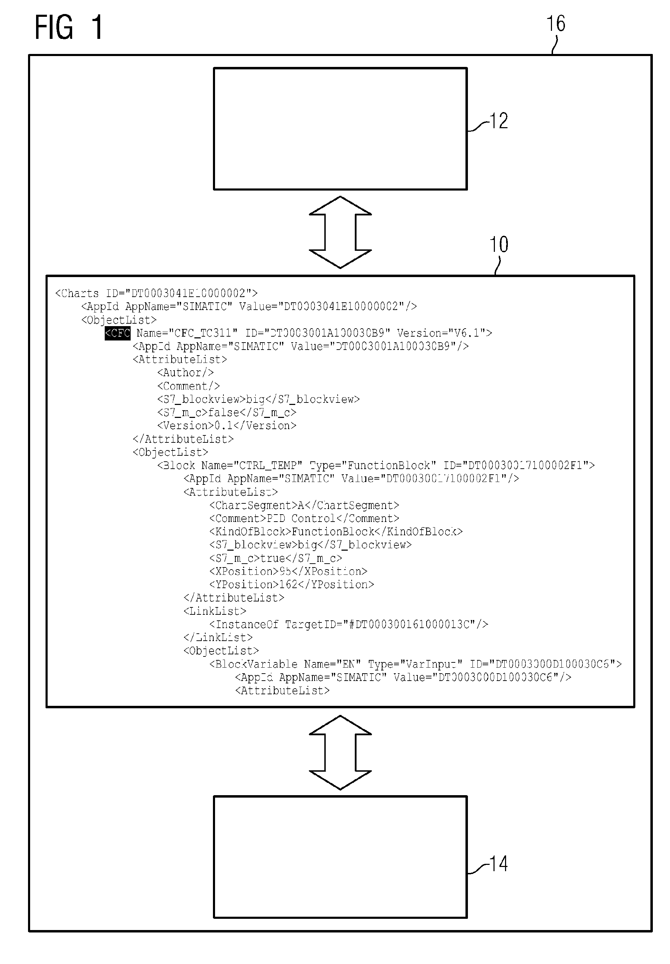

FIG 1 zeigt zur Veranschaulichung der der Erfindung zugrunde liegenden Problematik Daten 10, die zum Austausch zwischen einer ersten Softwareapplikation (Ursprungsapplikation) 12 und einer zweiten Softwareapplikation (Zielapplikation) 14 vorgesehen sind. Die Daten 10 sind in einem Metaformat kodiert, wobei als Metaformat hier beispielhaft ein XML-Format dargestellt ist. Die Darstellung in FIG 1 soll deutlich machen, dass eine direkte Darstellung von XML-Daten 10 für einen Anwender ohne Programmierkenntnisse nur eingeschränkt aussagefähig und entsprechend eine Hantierung umständlich ist.

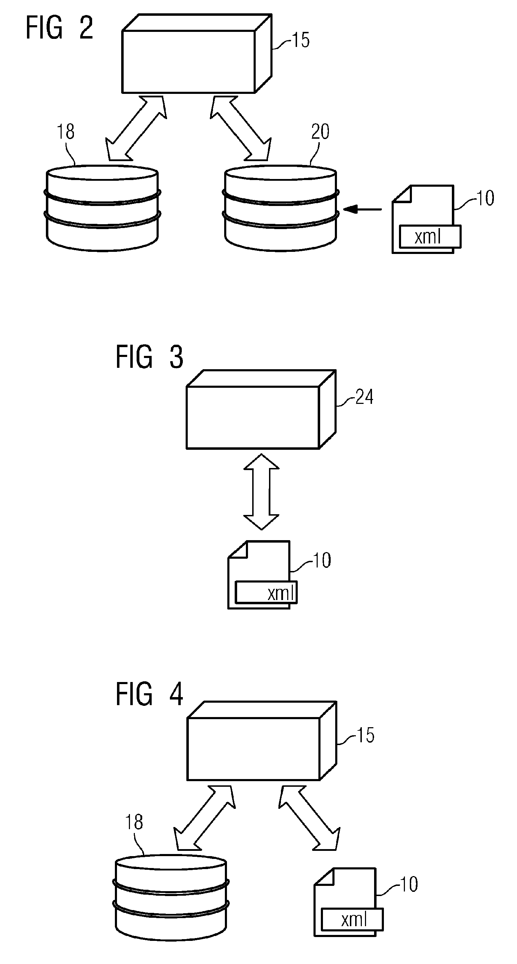

Beide Softwareapplikationen 12, 14 können auf einem schematisch dargestellten Automatisierungsgerät 16 ablaufen. Genauso können beide Softwareapplikationen 12, 14 auf unterschiedlichen Automatisierungsgeräten (nicht dargestellt), also z. B. in einem verteilten Automatisierungssystem ablaufen, wobei die einzelnen Automatisierungsgeräte dann in an sich bekannter Art und Weise, z. B. durch einen Bus, insbesondere den so genannten PROFIBUS, kommunikativ verbunden sind. Beide Softwareapplikationen 12, 14 zusammen oder diese Softwareapplikationen 12, 14 und evtl. weitere Softwareapplikationen bilden zusammen ein Softwaresystem 15 (FIG 2).

FIG 2 zeigt zur weiteren Verdeutlichung der der Erfindung zugrunde liegenden Problematik das Softwaresystem 15 in schematisch vereinfachter Darstellung mit einem Zugriff auf eine Datenbasis in Form einer ersten Datenbank 18 und eine weitere Datenbasis in Form einer temporären Datenbank 20. Zum Austausch von Daten zwischen der Datenbank 18 und dem Softwaresystem 15 kann ein Datenaustausch der in FIG 1 dargestellten Art erfolgen. Das Softwaresystem oder eine Softwareapplikation des Softwaresystems und die Datenbank 18 fungieren dann als Zielapplikation 14. Im Stand der Technik ist dazu vorgesehen, dass, z. B. bei einem eventuellen Wunsch, die im Metaformat vorliegenden Daten vor einer Übernahme in das jeweilige Softwaresystem 15 betrachten zu wollen, die Daten in der temporären Datenbank 20 zwischengespeichert werden, wobei das Format der in der temporären Datenbank 20 vorgehaltenen Daten einen direkten Zugriff, z. B. durch das Softwaresystem 25 bzw. die Zielapplikation 14, ermöglicht. Dazu erfolgt beim Abspeichern der Daten in die temporäre Datenbank 20 eine entsprechende Konvertierung, welche nicht nur zeitaufwendig ist, sondern auch Ressourcen, insbesondere Speicherplatz, belegt.

FIG 3 zeigt in schematisch vereinfachter Form einen Zugriff auf Daten 10, die in einem Metaformat, also insbesondere im XML-Format vorliegen, mittels eines zur Interpretation dieses Metaformats vorgesehenen Zugriffsprogramms, also z. B. mittels eines so genannten Viewers 24, insbesondere eines XML-Viewers.

Der bisher im Stand der Technik verfolgte Ansatz zum Zugriff auf Daten, die in einem Metaformat vorliegen, entspricht damit näherungsweise einer Kombination der in FIG 2 und FIG 3 dargestellten Verhältnisse.

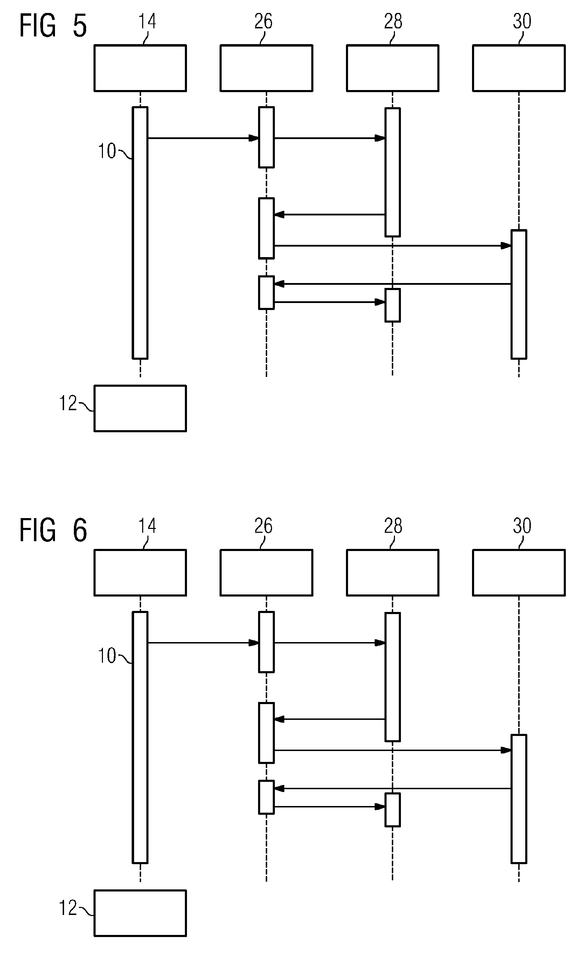

Die Erfindung bricht mit diesem Konzept und schlägt ein Verfahren sowie eine korrespondierende Vorrichtung vor, das schematisch vereinfacht in FIG 4 dargestellt ist, wobei eine Interpretation der Daten im Metaformat direkt, also ohne Konvertierung in das Zielformat, durch eine geeignete Adaption des Softwaresystems 15 erreicht wird. Dazu wird eine Standarddatenzugriffsschnittstelle des Softwaresystems 15 derart verhüllt ("wrapping"), dass sowohl z. B. ein herkömmliches Datenmanagementsystem als auch ein XML-Server, sofern als Metaformat XML Verwendung findet, für die Datenzugriffe genutzt werden können. Die weitere Erläuterung erfolgt dazu anhand von FIG 5.

FIG 5 zeigt in schematisch vereinfachter Form Verhältnisse beim Zugriff und bei der Interpretation von in einem Metaformat übermittelten Daten 10. Ganz links ist eine als Zielapplikation 14 fungierende Softwareapplikation dargestellt, an die Daten 10 in einem Metaformat von einer als Ursprungsapplikation 12 fungierenden weiteren Softwareapplikation übermittelt werden. Die oder jede beteiligte Softwareapplikation, also z. B. die Ursprungs- und Zielapplikation 12, 14, kann als Bestandteil des Softwaresystems 15 aufgefasst werden. Die Ursprungsapplikation 12 kann zusätzlich oder alternativ auch als Bestandteil der Datenbank oder -basis 18 (vergleiche FIG 4) aufgefasst werden. Bei oder vor einem Zugriff auf die Daten 10 im Metaformat erfolgt durch ein erstes Zugriffsmittel 26, z. B. einen so genannten "Broker" 26, eine Analyse der Daten 10. Abhängig vom Ergebnis der Analyse erfolgt ein Zugriff auf die Daten 10 entweder mittels eines Metaformatinterpreters 28 oder mittels zweiter Zugriffsmittel 30 oder eventuell weiterer Zugriffsmittel (nicht dargestellt). Das erste Zugriffsmittel 26, also z. B. der Broker 26, wird beim Zugriff auf die Daten 10 quasi zwischengeschaltet, so dass Zugriffe auf Daten im jeweiligen internen Datenformat auf das zweite Zugriffsmittel 30, insbesondere ein Datenbankverwaltungssystem 30, und Zugriffe auf Daten im Metaformat auf den Metaformatinterpreter 28 verteilt werden.

Die Verteilung erfolgt bevorzugt in Abhängigkeit von einer Adressierung einer strukturellen Einheit der Daten 10, nachdem bei gebräuchlichen Metaformaten, insbesondere XML-Daten, die Daten strukturiert sind und jede Struktur ein Datenobjekt definiert, so dass jedes Datenobjekt anhand seines Objekttyps und eine darauf bezogene Adressierung eindeutig erkennbar ist. Aus Sicht der jeweiligen Ziel- oder Softwareapplikation 14 des Softwaresystems 15 erfolgt der Datenzugriff damit weiterhin unabhängig vom zugrunde liegenden Datenformat.

Eine Besonderheit des erfindungsgemäßen Verfahrens liegt in der Behandlung des Problems, dass in bestimmten Fällen Dienste vom Metaformatinterpreter 28 nicht selbst erbracht werden können. Dieses ist dann der Fall, wenn zum Erbringen dieses Dienstes Informationen notwendig sind, die für den Metaformatinterpreter 28 nicht direkt zugänglich sind. Beispiele dafür sind Anzeigetexte, insbesondere fremdsprachiger Text, oder Elemente zur graphischen Repräsentation von Objekten, wie z. B. Ikonen usw. Ein anderer Grund kann auch die Vermeidung einer doppelten Implementierung von Diensten sein, wie z. B. das Normieren von Werten. Dieses spezielle Problem wird durch eine Art von Delegation des jeweils angeforderten Dienstes an die zweiten Zugriffsmittel, insbesondere das Datenbankverwaltungssystem 30, gelöst. Dazu muss die Adressierung des jeweiligen Objektes im Metaformat in eine korrespondierende Adressierung z. B. eines Datenmanagementobjektes umgewandelt werden. In einer bevorzugten Ausführungsform ist dazu eine Wandlung der Kodierung des Objekttyps von z. B. einem XML-Objekttyp in einen Datenbankobjekttyp vorgesehen. FIG 5 zeigt am Beispiel der Ermittlung eines Handles, also z. B. einer so genannten Ikone zur graphischen Repräsentation des jeweiligen Objekts, wie die dafür erforderlichen Aufrufe und Zugriffe der jeweiligen Zugriffsmittel, also "Broker" 26 und Metaformatinterpreter 28, ablaufen.

Damit lässt sich die Erfindung kurz wie folgt darstellen:

Die vorliegende Erfindung beruht auf einer zugrunde liegenden Idee, wonach die Interpretation von Daten 10 in einem Metaformat direkt, also ohne (temporäre) Konvertierung in ein jeweiliges Zielformat, durch eine geeignete Anpassung des jeweiligen Softwaresystems erreicht werden soll. Die Erfindung verfolgt damit das Ziel einer vollständig integrierten Lösung. Aus Anwendersicht präsentiert sich das Softwaresystem unabhängig von den verwendeten Datenformaten, also unabhängig sowohl vom systeminternen Datenformat (Ursprungs- und/oder Zielformat) als auch vom jeweiligen Metaformat, und der Zugriff auf die Daten, also z. B. deren Darstellung, erfolgt stets auf die gleiche Art und Weise.

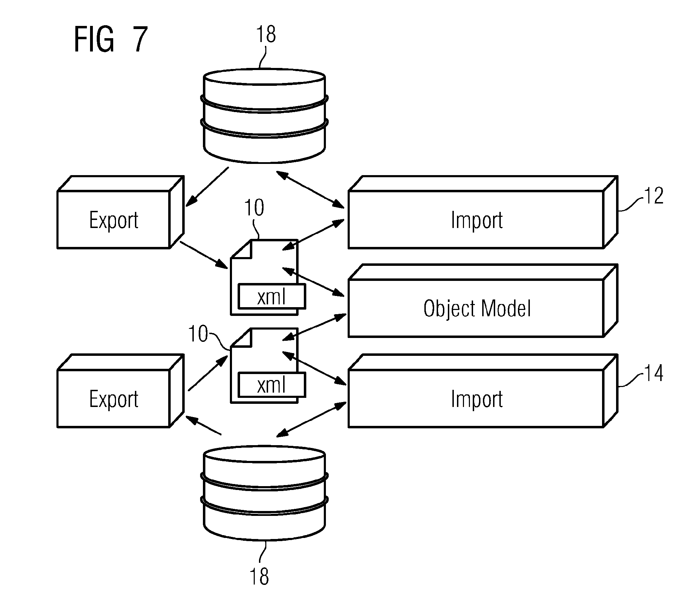

Die Erfindung eignet sich besonders für eine Anwendung bei der computergestützten Planung und Realisierung industrieller Anlagen. Es kommen dabei heterogene Softwaresysteme unterschiedlicher Hersteller zum Einsatz. Dies ist schematisch vereinfacht in FIG 7 dargestellt. Für die Planung einer industriellen Anlage werden z. B. andere Softwaresysteme als für die Planung der Leittechnik verwendet. Exemplarisch dargestellt sind eine erste Datenbasis 18 mit CAE-Daten, also insbesondere Planungsdaten, und eine zweite Datenbasis 18 mit ES-Daten, also Daten für ein so genanntes Engineeringsystem. Dennoch sollen aber die Planungsdaten der Anlage von entsprechenden Softwarewerkzeugen für die Leittechnik (und umgekehrt) übernommen werden können, um sie nicht noch einmal eingeben zu müssen. Dies erfordert eine definierte Datenschnittstelle. Der Datenaustausch ist bei modernen Systemen mittels eines Metaformats, insbesondere auf XML-Basis, geplant. Umgekehrt sollten auch Änderungen und Erweiterungen in den leittechnischen Daten von den Softwareplanungswerkzeugen übernommen werden können.

Die von den Softwareplanungswerkzeugen (als Beispiel für eine erste Softwareapplikation 12) zu übernehmenden Planungsdaten können gemäß der Erfindung in gewohnter Art und Weise von den Engineering-Softwarewerkzeugen (als Beispiel für eine zweite Softwareapplikation 14) des Leittechniksystems dargestellt werden, ohne vorher in das Datenformat des Leittechniksystems konvertiert worden zu sein. In gleicher Art und Weise ist ein Datenaustausch mit der vorliegenden Erfindung auch auf umgekehrtem Wege, also ein Zugriff mit Planungstools auf Engineeringdaten, möglich.

## Patentansprüche

1. Verfahren zum Betrieb eines Automatisierungsgerätes (16), auf dem zumindest eine erste Softwareapplikation (12) implementiert ist und wobei ein Datenaustausch zwischen der ersten Softwareapplikation (12) und einer zweiten Softwareapplikation (14) in einem Metaformat erfolgt,
wobei vor einer Übernahme der übermittelten Daten (10) durch jeweils entweder die erste oder zweite Softwareapplikation (12, 14) eine Umsetzung des Metaformats in ein auf Seiten der jeweiligen Softwareapplikation (12, 14) unterstütztes Datenformat durch einen Metaformatinterpreter (28) erfolgt,
**dadurch gekennzeichnet,**
**dass** bei oder vor einem Zugriff auf die Daten (10) im Metaformat durch ein erstes Zugriffsmittel (26) eine Analyse der Daten (10) im Metaformat erfolgt und dass abhängig vom Ergebnis der Analyse ein Zugriff auf die Daten (10) entweder mittels des Metaformatinterpreters (28) oder durch zweite Zugriffsmittel (30) erfolgt.

2. Verfahren nach Anspruch 1,
wobei das oder jedes zweite Zugriffsmittel (30) einen Zugriff auf in den im Metaformat übermittelten Daten (10) enthaltene Daten, die jedoch selbst nicht in dem Metaformat kodiert sind, ermöglicht.

3. Verfahren nach Anspruch 1 oder 2,
wobei die im Metaformat übermittelten Daten (10) strukturiert sind und wobei jede Struktur ein Datenobjekt definiert,
wobei das erste Zugriffsmittel (26) bei der Analyse der Daten (10) im Metaformat einen Objekttyp des jeweiligen Datenobjektes identifiziert und
wobei der Zugriff und/oder die Verarbeitung der Daten des Datenobjektes durch entweder den Metaformatinterpreter (28) oder durch das zweite Zugriffsmittel (30) in Ansehung des jeweiligen Objekttyps erfolgt.

4. Verfahren nach einem der vorangehenden Ansprüche,
wobei das Metaformat ein Format zur Erstellung maschinen- und menschenlesbarer Dokumente in Form einer Baumstruktur, insbesondere ein XML- oder SGML-Format, ist.

5. Verfahren nach Anspruch 4,
wobei der Metaformatinterpreter (28) als XML-Server oder SGML-Server implementiert ist.

6. Verfahren nach einem der vorangehenden Ansprüche,
wobei das zweite Zugriffsmittel (30) ein Datenbankverwaltungssystem ist.

7. Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

8. Computerprogrammprodukt, insbesondere Speichermedium, mit einem durch einen Computer ausführbaren Computerprogramm gemäß Anspruch 7.

9. Automatisierungsgerät (16) mit zumindest einer ersten und einer zweiten darauf implementierten oder implementierbaren Softwareapplikation (12, 14), wobei ein Datenaustausch zwischen der ersten und zweiten Softwareapplikation (12, 14) in einem Metaformat erfolgt,
wobei vor einer Übernahme der übermittelten Daten (40) durch jeweils entweder die erste oder zweite Softwareapplikation (12, 14) zur Umsetzung des Metaformats in ein auf Seiten der jeweiligen Softwareapplikation (12, 14) unterstütztes Datenformat ein Metaformatinterpreter (28) vorgesehen ist,
**dadurch gekennzeichnet,**
**dass** ein erstes Zugriffsmittel (26) zur Analyse der Daten (10) im Metaformat bei oder vor einem Zugriff auf diese Daten (10) vorgesehen ist und dass das erste Zugriffsmittel (26) zur Aktivierung eines Zugriffs auf die Daten (10) entweder mittels des Metaformatinterpreters (28) oder durch zweite Zugriffsmittel (30) vorgesehen ist.
